(19) Europäisches Patentamt
European Patent Office
Office européen des brevets

(11) **EP 3 599 445 B1**

(12) **FASCICULE DE BREVET EUROPEEN**

(45) Date de publication et mention
de la délivrance du brevet:
**16.06.2021 Bulletin 2021/24**

(51) Int Cl.:
*G01C 21/32* *(2006.01)* *G01C 21/34* *(2006.01)*
*G06F 16/29* *(2019.01)*

(21) Numéro de dépôt: **19184848.0**

(22) Date de dépôt: **08.07.2019**

(54) **PROCÉDÉ DE DÉTERMINATION D'UN ITINERAIRE MINIMISANT LA DÉPENSE ENERGETIQUE D'UN VEHICULE HYBRIDE AU MOYEN D'UN GRAPHE ADJOINT ÉTENDU**

VERFAHREN ZUM SUCHEN EINER ROUTE, DIE DEN ENERGIEVERBRAUCH EINES HYBRIDFAHRZEUGS MINIMIERT, UNTER VERWENDUNG EINES VERLÄNGERTEN KANTENGRAPHS.

METHOD OF SEARCHING A ROUTE MINIMIZING THE ENERGY CONSUMPTION OF A HYBRID VEHICLE USING AN EXTENDED LINE GRAPH

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.07.2018 FR 1856807**

(43) Date de publication de la demande:
**29.01.2020 Bulletin 2020/05**

(73) Titulaire: **IFP Energies nouvelles
92852 Rueil-Malmaison Cedex (FR)**

(72) Inventeurs:
• **DE NUNZIO, Giovanni
92852 RUEIL-MALMAISON CEDEX (FR)**
• **SCIARRETTA, Antonio
92852 RUEIL-MALMAISON CEDEX (FR)**
• **BEN GHARBIA, Ibtihel
92852 RUEIL-MALMAISON CEDEX (FR)**

(56) Documents cités:
**EP-A2- 2 669 632** **EP-A2- 3 315 913**
**US-A1- 2003 045 999** **US-A1- 2009 326 750**

• **RAMI ABOUSLEIMAN ET AL: "A Bellman-Ford approach to energy efficient routing of electric vehicles", 2015 IEEE TRANSPORTATION ELECTRIFICATION CONFERENCE AND EXPO (ITEC), 1 juin 2015 (2015-06-01), pages 1-4, XP055386219, DOI: 10.1109/ITEC.2015.7165772 ISBN: 978-1-4673-6741-7**

**Description**

La présente invention concerne le domaine de la navigation des véhicules hybrides, et en particulier le domaine de l'éco-navigation (de l'anglais « eco-routing »), qui détermine un itinéraire minimisant l'énergie consommée par le véhicule.

Selon l'Agence Internationale de l'Energie, plus du 50% du pétrole utilisé dans le monde est destiné au secteur des transports, dont plus des trois quarts pour les transports routiers. Selon cette même agence, le secteur des transports est responsable pour presque un quart (23.8%) des émissions de gaz à effet de serre et plus d'un quart (27.9%) des émissions de $CO_2$ en Europe en 2006.

Il est donc de plus en plus important d'augmenter l'efficacité énergétique des déplacements routiers, pour réduire la consommation d'énergie, qu'il s'agisse d'énergies fossile ou électrique.

Pour y parvenir, plusieurs axes sont en cours de développement.

D'une part, les systèmes d'assistance à la conduite (ADAS, de l'anglais « Advanced Driver Assistance Systems ») représentent une solution prometteuse, car économique (car on peut utiliser simplement le téléphone intelligent du conducteur) et non intrusive (car on n'a pas besoin d'apporter des modifications aux composants mécaniques du véhicule). Des stratégies de navigation dite « éco-navigation » ont été développées.

D'autre part, les constructeurs travaillent sur différentes technologies de motorisation de véhicules. Parmi ces technologies, on distingue notamment et de manière non limitative, trois grandes catégories :

- les véhicules dits « thermiques » entraînés par des moteurs à combustion interne,
- les véhicules dits « électriques » entraînés ou entraînant des machines électriques, alimentées par et/ou rechargeant une batterie,
- et les véhicules dits « hybrides », c'est-à-dire à la fois équipés d'un moteur à combustion interne et d'une machine électrique, la machine électrique rechargeant ou étant alimentée par une batterie.

Les véhicules dits « hybrides » sont en plein essor. Cette catégorie de véhicule est particulièrement intéressante car elle permet de récupérer l'énergie sous forme électrique lorsque la configuration du véhicule le permet (freinage, route en phase de descente) et permet aussi de limiter les émissions de gaz à effet de serre par l'utilisation de la motorisation électrique. De plus, ce type de véhicule ne présente pas les inconvénients du véhicule électrique, comme la faible capacité des batteries limitant les parcours possibles avec le véhicule sans avoir à recharger les batteries, ainsi que les difficultés et les durées de recharge des batteries, qui peuvent complexifier et/ou rallonger la durée d'un parcours avec un véhicule électrique.

Compte tenu de la diversité des motorisations possibles des véhicules, les stratégies dite d'« éco-navigation » doivent être adaptées aux différents types de motorisations. En effet, les modèles de consommation diffèrent d'une motorisation à l'autre. De plus, pour les machines électriques, des contraintes d'état de charge minimal et maximal doivent également être ajoutées pour tenir compte des capacités de la batterie.

L'éco-navigation a été envisagée dans les demandes de brevets suivants : US 2012123657, US 2012179315, US 2012066232, US 9091560. Toutefois, ces demandes de brevet ne précisent pas de quelle manière est déterminé l'itinéraire qui minimise la consommation énergétique, ni de quelle manière est déterminée la vitesse utilisée pour ces méthodes. Il n'est donc pas possible de connaître la précision obtenue par les méthodes décrites dans ces demandes de brevet.

D'autres méthodes d'éco-navigation sont basées sur l'algorithme de Dijkstra de plus court chemin, pour déterminer l'itinéraire qui minimise la dépense énergétique. Toutefois, cet algorithme ne prend pas en compte des valeurs négatives de dépense énergétique (qui représentent alors une récupération d'énergie). Par conséquent, cet algorithme peut être utilisé uniquement pour des véhicules thermiques, et ne peut pas être utilisé pour des véhicules électriques, pour lesquels une récupération d'énergie est possible (par exemple avec un freinage récupératif), et il est également critique pour les véhicules hybrides qui disposent d'un moteur électrique. Par conséquent, ces méthodes ne sont pas adaptables à tout type de véhicule. De telles méthodes sont décrites notamment dans les documents suivants :

- Andersen O, Jens CS, Torp K, Yang B (2013), « EcoTour : Reducing the environmental footprint of vehicles using eco-routes », Proc. 2013 IEEE 14th Int. Conf. on Mobile Data Management, Milan, Italy, 3-6 June 2013,
- Boriboonsomsin K, Barth MJ, Zhu W, Vu A (2012), « Eco-routing navigation system based on multisource historical and real-time traffic information », IEEE Trans. on Intelligent Transportation Systems, vol. 13, no. 4, p. 1694-1704,
- Ben Dhaou I, « Fuel estimation model for ECO-driving and ECO-routing », Proc. 2011 IEEE Intelligent Vehicles Symposium, Baden-Baden, Germany, 5-9 June 2011, p. 37-42,
- Ericsson E, Larsson H, Brundell-Freij K (2006), « Optimizing route choice for lowest fuel consumption - Potential effects of a new driver support tool », Transportation research Part C, vol. 14, p. 369-383.

Les stratégies de navigation existantes visent principalement les véhicules comportant une seule motorisation, soit électrique (voir S. Kluge, C. Santa, S. Dangl, S. Wild, M. Brokate, K. Reif and F. Busch (2013), « On the Computation of the Energy-Optimal Route Dépendent on the Traffic Load in Ingolstadt », Transportation Research Part C, vol. 36, pp. 97-115), soit thermique (voir Y. M. Nie and Q. Li (2013), « An Eco-Routing Model Considering Microscopic Vehicle Operating Conditions », Transportation Research part B, vol. 55, pp.154-170).

La demande de brevet FR 305 79 51 A1 propose une stratégie de navigation, minimisant l'énergie consommée par le véhicule. Cette stratégie est bien adaptée aux véhicules électriques. Toutefois, sa mise en œuvre se révèle complexe pour les véhicules hybrides.

L'application d'une stratégie d'"éco-navigation" à un véhicule hybride est rendue complexe par :

- La modélisation de la consommation énergétique impliquant à la fois le moteur thermique (également appelé « moteur à combustion interne ») et la machine électrique ;
- Les opérations de charge et de décharge de la batterie et les seuils d'état de charge minimal et maximal de la batterie ;
- La résolution du problème d'optimisation non polynomial, notamment lié aux contraintes d'état de charge sur la batterie.

J. Zhao, A. Sciarretta (2016), « Design and Control Co-optimisation for hybrid powertrains : Development of Dedicated Optimal Energy Management Strategy », IFAC-PapersOnline, vol. 49, no. 11, pp. 277-284, propose une stratégie de gestion énergétique pour un véhicule hybride mais ne propose pas une stratégie de navigation dédié à ce type de véhicule, basé sur une approche analytique, et ne tient donc pas compte du trafic du réseau routier. En outre, cette stratégie de gestion énergétique ne tient pas compte de l'évolution de l'état de charge de la batterie.

M.M. Nejad, L. Mashayekhy, D. Grosu, R. B. Chinnam (2017) "Optimal routing for Plug-in Hybrid Electric Vehicles", Transportation Science, vol. 51, no. 4, pp. 1304-1325 concerne une stratégie de navigation pour véhicules hybrides où le véhicule fonctionne soit à 100% avec le moteur thermique, soit à 100% avec le moteur électrique. Cette stratégie de navigation n'est pas optimale car elle exclut de nombreux modes de fonctionnement intermédiaires avec une répartition simultanée de l'énergie entre le moteur thermique et la machine électrique.

M. Strehler, S. Merting, and C. Schwan (2017), "Energy-efficient shortest routes for electric and hybrid vehicles", Transportation Research Part B, vol. 103, pp. 111-135, propose une stratégie de navigation pour véhicules hybrides mais les auteurs reconnaissent que cette stratégie ne pourrait pas être mise en œuvre en pratique compte tenu des temps de calcul engendrés par les algorithmes proposés. Pour pallier ce problème, les auteurs proposent aussi une approche qui devrait réduire les temps de calculs mais qui sacrifie la précision d'estimation de l'évolution de la charge batterie le long de la route par une discrétisation absolue.

Afin de proposer une stratégie de navigation permettant de minimiser la consommation de carburant d'un véhicule hybride, tout en permettant des temps de calcul raisonnables pour des applications réelles, la présente invention concerne un procédé de détermination d'un itinéraire, pour un véhicule de type hybride circulant au sein d'un réseau routier. Ce procédé est basé sur un modèle de consommation énergétique incluant à la fois un modèle de consommation pour le moteur à combustion interne et à la fois, un modèle de charge / décharge d'un moyen de stockage d'énergie (par exemple une batterie) pour le fonctionnement d'un moteur électrique. Le procédé utilise une loi de gestion énergétique pour déterminer sur chaque portion de route, la commande optimale pour minimiser l'énergie. Par ailleurs, le procédé tient compte de contraintes notamment sur l'état de charge du moyen de stockage d'énergie. Le procédé utilise un algorithme de plus court chemin pour déterminer l'itinéraire optimal en terme de consommation énergétique.

La présente invention concerne également un produit programme d'ordinateur téléchargeable depuis un réseau de communication et/ou enregistré sur un support lisible par un ordinateur et/ou exécutable par un processeur ou un serveur, comprenant des instructions de code de programme pour la mise en œuvre du procédé tel que décrit précédemment, lorsque le programme est exécuté sur un ordinateur ou sur un téléphone portable.

**Le procédé selon l'invention**

L'invention concerne un procédé de détermination d'un itinéraire, pour un véhicule de type hybride circulant au sein d'un réseau routier, ledit véhicule comprenant un groupe moto-propulseur hybride, ledit groupe moto-propulseur hybride comportant un moteur à combustion interne et une machine électrique, ladite machine électrique étant reliée à un moyen de stockage d'énergie, ledit procédé minimisant la consommation énergétique dudit moteur à combustion interne tout en respectant des contraintes sur l'état de charge dudit moyen de stockage d'énergie, dans lequel on réalise les étapes suivantes :

a) On identifie la position et la destination dudit véhicule ;
b) On construit un modèle de consommation énergétique dudit véhicule, basé sur la consommation énergétique dudit moteur à combustion interne d'une part et la consommation et/ou récupération d'énergie dudit moyen de stockage d'énergie de ladite machine électrique d'autre part ;

c) On construit une loi de gestion énergétique déterminant la commande dudit groupe motopropulseur hybride à partir dudit modèle de consommation énergétique ;

d) On construit un graphe adjoint étendu dudit réseau routier entre ladite position identifiée dudit véhicule et ladite destination identifiée dudit véhicule, le graphe adjoint étendu étant obtenu par les étapes suivantes :

i) On construit un graphe direct dudit réseau routier avec des nœuds et des arcs, lesdits nœuds dudit graphe direct correspondant aux intersections dudit réseau routier, et lesdits arcs dudit graphe direct correspondant aux routes reliant lesdites intersections du réseau routier ;

ii) On construit ledit graphe adjoint dudit réseau routier avec des nœuds et des arcs, lesdits nœuds dudit graphe adjoint correspondant auxdits arcs dudit graphe direct et lesdits arcs dudit graphe adjoint correspondant à l'adjacence desdits arcs dudit graphe direct ;

iii) On construit ledit graphe adjoint étendu à partir dudit graphe adjoint, en multipliant le nombre d'arcs dudit graphe adjoint, chacun desdits arcs multipliés étant associé à une valeur prédéfinie de variations dudit état de charge dudit moyen de stockage d'énergie, lesdites valeurs prédéfinies étant dépendantes dudit moyen de stockage d'énergie ;

e) On détermine la quantité de carburant consommé par ledit moteur à combustion interne, à partir de ladite loi de gestion énergétique, pour chaque arc du graphe adjoint étendu ; et

f) On détermine ledit itinéraire entre ladite position identifiée dudit véhicule et ladite destination identifiée dudit véhicule au moyen d'un algorithme de plus court chemin qui minimise sur ledit graphe adjoint étendu ladite quantité de carburant consommé dudit moteur à combustion interne tout en respectant les contraintes sur ledit état de charge dudit moyen de stockage d'énergie.

Selon une variante de l'invention, lesdites valeurs prédéfinies de variations dudit état de charge dudit moyen de stockage d'énergie correspondent à une discrétisation de valeurs entre une variation minimale dudit état de charge dudit moyen de stockage d'énergie et une variation maximale dudit état de charge dudit moyen de stockage d'énergie.

Selon une mise en œuvre de l'invention, lesdites valeurs prédéfinies de variations dudit état de charge dépendent dudit moyen de stockage d'énergie, d'un utilisateur dudit véhicule et/ou d'une topologie dudit réseau routier.

Selon un aspect, on définit, lors de l'étape c), un modèle de vitesses dudit véhicule basé sur les informations de vitesses moyennes de circulation des véhicules sur lesdits segments de route dudit réseau routier et sur la topologie des intersections entre les routes adjacentes dudit réseau routier.

Avantageusement, on détermine la vitesse moyenne au moyen de conditions de trafic et/ou topologie et/ou des infrastructures dudit réseau routier.

Préférentiellement, les conditions de trafic sont obtenues en temps réel par communication avec des services de données en ligne.

Selon une variante de l'invention, on construit le graphe adjoint étendu au moyen de ladite topologie dudit réseau routier.

Selon une mise en œuvre de l'invention, on détermine ladite topologie dudit réseau routier par des moyens de géolocalisation.

Conformément à un mode de réalisation, ledit modèle de consommation énergétique dépend des paramètres intrinsèques du véhicule.

De manière avantageuse, lesdits paramètres intrinsèques du véhicule sont obtenus depuis une base de données et/ou sont indiqués par ledit utilisateur dudit véhicule.

Selon une mode de réalisation, on affiche ledit itinéraire sur un dispositif autonome ou sur le tableau de bord dudit véhicule.

De manière préférée, ledit algorithme de plus court chemin est un algorithme de Bellman-Ford.

De manière avantageuse, lesdites contraintes dudit état de charge dudit moyen de stockage d'énergie sont l'état de charge initial, l'état de charge final, la variation globale entre l'état de charge initial et l'état de charge final, et/ou les variations d'état de charge sur chacun desdits segments de route dudit réseau routier.

Selon un aspect avantageux de l'invention, ledit algorithme de plus court chemin comprend les étapes successives suivantes :

(1) On minimise, par ledit algorithme de plus court chemin, ladite quantité de carburant consommé ;

(2) On vérifie si lesdites contraintes dudit état de charge dudit moyen de stockage d'énergie sont respectées ; et

(3) Si lesdites contraintes dudit état de charge dudit moyen de stockage d'énergie sont respectées, ledit itinéraire recherché correspond au chemin issu de la minimisation, et si non, on réitère les étapes (1) et (2).

De plus, l'invention concerne aussi un produit programme d'ordinateur téléchargeable depuis un réseau de communication et/ou enregistré sur un support lisible par ordinateur et/ou exécutable par un processeur ou un serveur, comprenant des instructions de code de programme pour la mise en œuvre du procédé selon l'une des caractéristiques précédentes, lorsque ledit programme est exécuté sur un ordinateur ou sur un téléphone portable.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre les étapes du procédé, selon un premier mode de réalisation de l'invention.
La figure 2 illustre les étapes du procédé, selon un deuxième mode de réalisation de l'invention.
La figure 3 illustre les étapes d'une variante de l'algorithme de choix de l'itinéraire selon l'invention.
La figure 4 illustre les étapes de construction du graphe adjoint étendu selon l'invention.
La figure 5a illustre la modélisation d'un mode de réalisation du profil de vitesse aux intersections selon l'invention.
La figure 5b illustre le profil de puissance nécessaire associée au mode de réalisation du profil de vitesse de la figure 5a, selon l'invention.
La figure 6 illustre l'itinéraire trouvé par l'algorithme selon un mode de réalisation du procédé selon l'invention.
La figure 7 illustre les variations d'altitude, d'état de charge de la batterie et de consommation de carburant selon l'itinéraire trouvé et correspondant à la figure 6.

**Description détaillée de l'invention**

L'invention concerne un procédé de détermination d'un itinéraire, pour un véhicule de type hybride circulant au sein d'un réseau routier. On appelle « itinéraire » un chemin allant d'une position initiale à une destination finale. Le véhicule comprend un groupe moto-propulseur-hybride qui comporte un moteur à combustion interne et une machine électrique, la machine électrique étant reliée à un moyen de stockage d'énergie. Ce type de véhicule a les avantages de réduire la consommation de carburant, de réduire les émissions de gaz à effet de serre, et potentiellement de pouvoir récupérer de l'énergie lors de certaines phases (freinage par exemple) par rapport à l'utilisation d'un moteur à combustion interne seul. De plus, ce type de véhicule ne possède pas les inconvénients d'un véhicule électrique (sans moteur à combustion interne) concernant la durée de recharge du moyen de stockage d'énergie (comme une batterie par exemple), et de la faible distance atteignable sans recharge.

Le moyen de stockage d'énergie alimente la machine électrique lors de besoin de puissance (la machine électrique fonctionne alors en moteur). Lorsqu'aucune puissance électrique n'est requise, la machine électrique peut alors fonctionner en générateur, dans certaines situations (par exemple, lors d'un freinage). Elle recharge alors le moyen de stockage d'énergie en énergie.

Le procédé sert à minimiser la consommation énergétique du moteur à combustion interne tout en respectant les contraintes sur l'état de charge du moyen de stockage d'énergie (par exemple, charges minimale et maximale à respecter).

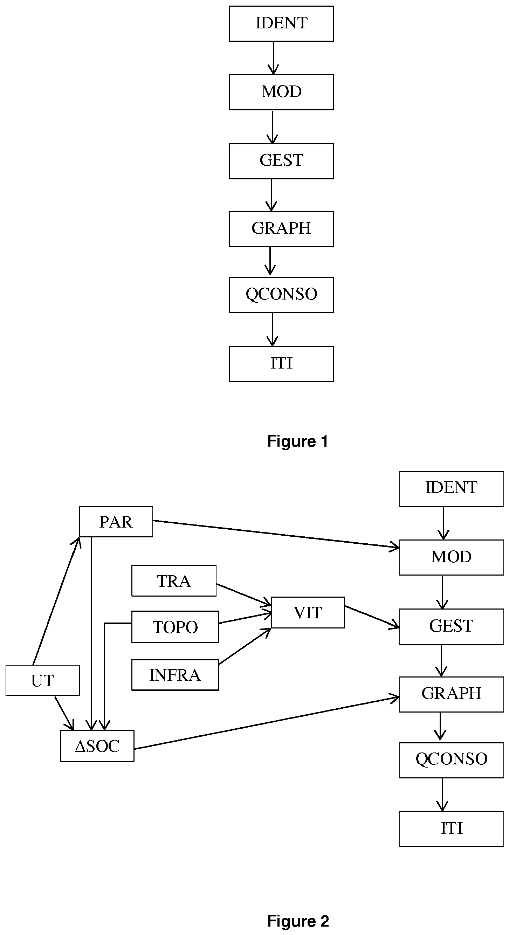

Pour cela, la figure 1 illustre schématiquement et de manière non limitative, les étapes du procédé, selon un mode de réalisation de l'invention :

a) Identification (IDENT) de la position et de la destination du véhicule,
b) Construction d'un modèle de consommation énergétique (MOD) du véhicule,
c) Construction d'une loi de gestion énergétique (GEST),
d) Construction d'un graphe (GRAPH) adjoint étendu du réseau routier,
e) Détermination de la quantité de carburant consommé (QCONSO),
f) Détermination de l'itinéraire (ITI).

L'étape a) d'identification (IDENT) de la position et de la destination peut être réalisée dans l'ordre établi ci-dessus, simultanément ou après les étapes b) à e).

L'étape c) est réalisée après l'étape b) et les étapes b) et c) peuvent être réalisées dans l'ordre établi ci-dessus, ou bien simultanément ou après l'étape d).

La figure 2 illustre, de manière schématique et non limitative, un deuxième mode de réalisation du procédé selon l'invention. Sur cette figure, les références identiques à celles de la figure 1 correspondent aux mêmes éléments. Elles ne seront donc pas re-détaillées.

Le modèle de consommation énergétique (MOD) dépend des paramètres intrinsèques (PAR) du véhicule. Ces paramètres intrinsèques (PAR) peuvent notamment être la masse du véhicule, les caractéristiques de la transmission (rapport de transmission, rendement par exemple), les pneumatiques etc...

Ces paramètres intrinsèques (PAR) peuvent eux-mêmes provenir soit de base de données (par exemple issue du constructeur du véhicule) et/ou être renseignés par l'utilisateur (UT) du véhicule (conducteur, mécanicien, propriétaire par exemple).

La loi de gestion énergétique (GEST) peut prendre en compte un profil de vitesse (VIT) sur les segments de route, notamment la vitesse moyenne de circulation. Ce profil de vitesse (VIT) peut être directement la vitesse moyenne de circulation mais il peut également prendre en compte des variations de vitesse moyenne aux intersections, liées soit à l'infrastructure (INFRA), comme un « stop », un feu de signalisation, un rond-point ou encore les virages, soit liées à la topologie (TOPO) de la route (pente par exemple). Les variations de vitesse moyenne peuvent être des profils de variations linéaires en une ou plusieurs parties. La vitesse moyenne de circulation peut être par exemple issue des conditions de trafic (TRA).

Le graphe (GRAPH) peut dépendre de valeurs prédéfinies de variations de l'état de charge (ΔSOC) qui peuvent elles-mêmes dépendre des paramètres intrinsèques (PAR) du véhicule, notamment des paramètres et caractéristiques du moyen de stockage d'énergie afin d'éviter des conditions de dégradations importantes du moyen de stockage d'énergie. Elles (ΔSOC) peuvent aussi dépendre de la topologie (TOPO) du réseau routier et/ou de l'utilisateur (UT). En effet, l'utilisateur (UT) peut décider une certaine variation de l'état de charge dans le but de pouvoir utiliser son véhicule pour le retour ou, de manière plus large, pour une utilisation future spécifique pour laquelle une recharge du moyen de stockage d'énergie est impossible. La topologie (TOPO) du réseau routier peut également intervenir dans les valeurs prédéfinies de variation de l'état de charge (ΔSOC), par exemple, pour des routes à fortes pentes, positives ou négatives, où les valeurs prédéfinies peuvent alors être modifiées.

La figure 2 illustre la combinaison des étapes faisant intervenir les éléments facultatifs PAR, TRA, TOPO, INFRA, VIT, ΔSOC et UT. Toutefois, ces étapes peuvent être utilisées seules ou en combinaison les unes des autres et avec une seule partie ou tous les éléments facultatifs PAR, TRA, TOPO, INFRA, VIT, ΔSOC et UT.

*a) Identification de la position et de la destination du véhicule :*

Lors de cette étape, on identifie la position actuelle et la destination du véhicule. En d'autres termes, on identifie le départ et l'arrivée de l'itinéraire à parcourir.

La position actuelle du véhicule peut être identifiée au moyen d'un système de géolocalisation (par exemple de type GPS ou Galiléo). Alternativement, la position actuelle peut être indiquée par un utilisateur au moyen d'une interface avec celui-ci (par exemple un téléphone intelligent, le tableau de bord, ou un système de géolocalisation).

La destination du véhicule peut être indiquée par un utilisateur au moyen d'une interface avec celui-ci. Alternativement, la destination peut être stockée dans une base de données, par exemple s'il s'agit d'une destination préalablement connue (par exemple par un téléphone intelligent, au tableau de bord, ou un système de géolocalisation).

*b) Construction du modèle de consommation énergétique du véhicule*

La construction d'un modèle de consommation énergétique est utilisée pour la stratégie d'éco-navigation afin de déterminer précisément la consommation d'énergie.

Dans le cas d'un véhicule hybride, ce modèle intègre la modélisation de la consommation dédié au moteur à combustion interne et la modélisation de la consommation dédiée à la machine électrique. Pour la machine électrique, la consommation peut être négative et correspond alors à une récupération d'énergie. Mais pour simplifier la lecture, le terme « consommation » qui sera utilisé par la suite pour la machine électrique signifiera consommation ou récupération selon la nature positive ou négative. Il convient alors de noter que la consommation de la machine électrique intègre aussi la récupération d'énergie.

Tout d'abord, la puissance $P_w$ nécessaire au niveau des roues du véhicule, pour faire avancer le véhicule, peut s'écrire de la façon suivante :

$$P_w = m\dot{v}(t)v(t) + a_2 v(t)^3 + a_1 v(t)^2 + a_0 v(t) \qquad (1)$$

Avec m : masse du véhicule,
*v* : vitesse du véhicule
$\dot{v}$ : accélération du véhicule
$a_0$, $a_1$, $a_2$ : paramètres dépendant du véhicule.

Compte tenu du rendement du système de transmission $\eta_t$ la puissance nécessaire P$_d$ au niveau du groupe motopropulseur peut s'écrire :

$$P_d = P_w . \eta_t^{-\frac{|P_w|}{P_w}} = P_e + P_m$$

P$_e$ étant la puissance générée par le moteur à combustion interne et P$_m$ celle générée par la machine électrique.

De plus, la puissance de carburant P$_f$ nécessaire pour le moteur à combustion interne peut être estimée par une fonction affine, par l'approche dite « Willans-lines », classiquement utilisée pour les moteurs thermiques, par :

$$P_f = a_n + b_n . P_e$$

Où a$_n$ et b$_n$ sont des constantes.

D'une manière similaire, la puissance fournie par le moyen de stockage d'énergie Pb peut être estimée par une fonction quadratique dépendante de P$_m$, fonction quadratique choisie généralement pour les approximations de cartographies des moteurs électriques, du type :

$$P_b = c_n + d_n . P_m + e_n . P_m^2$$

On peut donc, à partir des caractéristiques du véhicule et de sa vitesse, déterminer la puissance instantanée nécessaire en carburant P$_f$ et celle requise par le moyen de stockage P$_b$, et donc estimer les énergies en carburant et en énergie contenue dans le moyen de stockage par intégration mathématique.

Selon une variante de l'invention, le modèle de consommation énergétique peut dépendre des paramètres intrinsèques du véhicule (étape facultative PAR de la figure 2), par exemple, la masse du véhicule, les paramètres de la transmission, du système de freinage, des pneumatiques, la puissance maximale du véhicule, la vitesse maximale, les paramètres aérodynamiques etc... Par exemple, ils permettent la détermination des paramètres a$_0$, a$_1$, a$_2$, a$_n$, b$_n$, c$_n$, d$_n$, et e$_n$. La précision du modèle de consommation énergétique est ainsi améliorée.

Avantageusement, les paramètres intrinsèques du véhicule peuvent être obtenus depuis une base de données, par exemple fournie par le constructeur, et/ou peuvent être renseignés par l'utilisateur du véhicule (étape facultative UT de la figure 2). L'utilisateur du véhicule peut être le conducteur, le propriétaire, le garagiste, le mécanicien, le concessionnaire, le gestionnaire d'une flotte de véhicules ou, de manière plus large, n'importe quelle personne qui agit sur le véhicule ou qui l'utilise. L'utilisation de la base de données permet un accès rapide aux données. Le renseignement par l'utilisateur peut permettre l'accès à des données supplémentaires et/ou prendre en compte des modifications effectuées sur le véhicule.

c) *Construction d'une loi de gestion énergétique*

La loi de gestion énergétique est une loi permettant de minimiser la consommation énergétique. En effet, comme le véhicule hybride comporte deux motorisations, il peut fonctionner, à chaque instant :

-   Soit avec le moteur thermique seul ;
-   Soit avec la machine électrique seule ;
-   Soit avec le moteur thermique et la machine électrique simultanément et avec des proportions de répartition d'énergie comprises entre 0 et 100%.

Contrairement à un véhicule à mono-propulsion (thermique ou électrique), il est donc utile de trouver, pour chaque portion de route, la répartition de puissance optimale entre le moteur thermique et la machine électrique. Cela constitue l'objectif de la loi de gestion énergétique qui peut alors commander en puissance le moteur thermique et la machine électrique.

Pour se faire, la loi de gestion énergétique peut, par exemple, être basée sur une fonction de Hamilton H(P$_m$,v) définie de la manière suivante :

$$H(P_m, v) = P_f + s . P_b = a_n + b_n (P_d - P_m) + s . (c_n + d_n . P_m + e_n . P_m^2)$$

Où s est appelée la variable de co-état, définissant la répartition de puissance entre le moteur thermique et la machine électrique.

Pour minimiser la consommation de carburant, il faut donc minimiser la fonction de Hamilton H en fonction de la puissance nécessaire de carburant $P_m$.

Une contrainte de variation d'état de charge $\Delta SOC$ du moyen de stockage d'énergie peut être prise en compte. Elle correspond alors à :

$$\Delta SOC = -\int_{t_1}^{t_2} P_b.d_t$$

t1 peut correspondre à l'instant initial à position initiale ou à un instant intermédiaire, par exemple, au début d'un segment de route. t2 peut correspondre à l'instant final (destination) ou à un instant intermédiaire, par exemple, à la fin d'un segment de route. Ainsi $\Delta SOC$ peut être une variation globale d'état de charge du moyen de stockage d'énergie entre la position initiale et la destination du véhicule ou bien une variation sur un segment de route.

Selon une variante de l'invention, lors de l'étape de construction de la loi de gestion énergétique, on peut définir un modèle de vitesses du véhicule (voir étape facultative VIT de la Figure 2 par exemple) basé sur les informations de vitesses moyennes de circulation des véhicules sur les segments de route du réseau routier et sur la topologie des intersections entre les routes adjacentes du réseau routier. En effet, l'utilisation, seule, de vitesses moyennes des véhicules pour la loi de gestion énergétique entraîne souvent des erreurs d'estimation. En effet, aux intersections de ces routes, la variation de vitesse n'est pas instantanée et peut être conditionnée par des feux de signalisation, des ronds-points, des « stop » ou « cédez-le-passage ». La prise en compte de la topologie des intersections dans le modèle de vitesse permet de limiter les erreurs inhérentes à la loi de gestion énergétique.

Le modèle de vitesse peut par exemple, s'écrire de la manière suivante. $v_{t,i}$ est la vitesse de transition à l'interface :

$$v_{t,i} = \beta.\frac{\bar{v}_i + \bar{v}_{i-1}}{2}$$

avec

$\bar{v}_i$ est la vitesse moyenne de circulation sur le segment i en aval de l'interface

$\bar{v}_{i-1}$ est la vitesse moyenne de circulation sur le segment i-1 en amont de l'interface

$\beta$ est un paramètre entre 0 inclus et 1 inclus dépendant du type d'interface

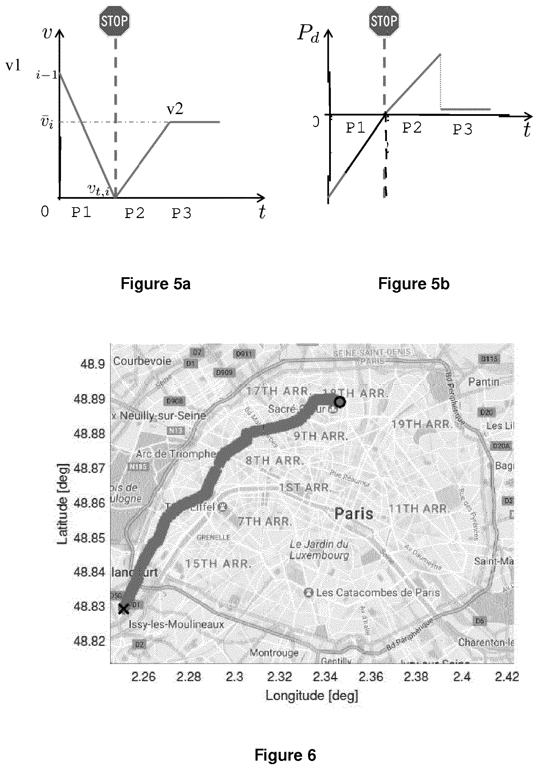

La figure 5a représente, de manière schématique et non limitative, un exemple de profil de vitesse modélisé concernant une intersection, et la figure 5b illustre la puissance requise par le véhicule en résultant.

Sur la figure 5a, le profil de vitesse modélisé v représente une intersection dont l'infrastructure est aménagée par un panneau de signalisation de type « stop », qui implique un arrêt du véhicule (entraînant une vitesse nulle). Pour se faire, le profil est modélisé de la manière suivante :

- Le véhicule arrive à une vitesse v1, correspondant à la vitesse moyenne de circulation des véhicules sur le segment en amont du panneau « stop ». La vitesse moyenne de circulation v1 peut par exemple être issue de base de données en ligne, éventuellement prenant en compte les conditions de trafic local (Voir étape facultative TRA de la Figure 2).

- Pendant une phase P1, en amont du panneau « stop », le véhicule décélère pour atteindre une vitesse nulle au niveau du panneau « stop » situé à l'intersection des segments de route amont et aval. Dans l'exemple de la figure 5a, on suppose une décélération uniforme, correspondant à un profil linéaire de vitesse mais tout autre profil pourrait être utilisé. Ce profil linéaire permet une modélisation simple, facilitant la résolution du problème de minimisation d'énergie, tout en prenant en compte les variations de puissance du véhicule aux intersections.

- Pendant une phase P2, suivant la phase P1, le véhicule quitte le panneau « stop » pour s'engager dans le segment de route situé en aval du panneau « stop ». Ainsi, il accélère depuis une vitesse nulle (au panneau « stop ») jusqu'à une vitesse v2, correspondant à la vitesse moyenne de circulation des véhicules sur le segment de route en aval du panneau « stop ». On suppose ici une accélération uniforme avec un profil linéaire de vitesses. Ce profil linéaire permet une modélisation simple, facilitant la résolution du problème de minimisation d'énergie, tout en prenant en compte les variations de puissance du véhicule aux intersections. Cependant, d'autres profils de vitesse, non linéaires, pourraient aussi être utilisés.
- Pendant la phase P3, succédant la phase P2, le véhicule se déplace sur le segment de route en aval du panneau « stop » à la vitesse v2 constante, correspondant à la vitesse moyenne de circulation des véhicules sur ce segment. La vitesse moyenne de circulation v2 peut par exemple être issue de base de données en ligne, éventuellement prenant en compte les conditions de trafic local.

La figure 5b représente l'appel de puissance nécessaire Pd pour le véhicule au moment de la transition de vitesse correspondant au graphique de la figure 5a. En outre, on observe que :

- Pendant la phase P1, la puissance nécessaire est négative : la machine électrique peut fonctionner en générateur et ainsi recharger le moyen de stockage d'énergie pendant cette phase. La pente de la courbe de puissance nécessaire Pd est linéaire, en cohérence avec le profil de vitesse dans cette phase.
- Pendant la phase P2, le véhicule accélère. Il entraîne donc un appel de puissance, la puissance nécessaire Pd devient donc positive avec une pente linéaire, en cohérence avec le profil de vitesse de cette phase.
- Pendant la phase P3, le véhicule circule à vitesse constante. La puissance requise est donc également constante.

Il est à noter que les profils de vitesse et de puissance sont cohérents (linéarité ou constance) car on suppose que les routes ne voient aucune variation d'altitude sur ces phases de courtes périodes. Des variations d'altitude pourraient bien-entendu modifier le profil de puissance.

De préférence, on peut déterminer la vitesse moyenne des véhicules de chaque segment du réseau routier au moyen des conditions de trafic et/ou de la topologie et/ou de l'infrastructure du réseau routier (voir étapes facultatives TOPO et INFRA de la Figure 2). Par infrastructure du réseau routier, on entend toutes les constructions et aménagements à la nature des lieux, par exemple la réalisation de virages, de jonctions/intersections de routes, l'ajout de ronds-points, feux de signalisation et autres éléments relatifs à la circulation et à la gestion du trafic. Par topologie, on entend au sens large, les caractéristiques propres du réseau routier induite par la nature des lieux, telles que les variations d'altitudes du réseau routier (forte pente positive ou négative par exemple). La topologie et l'infrastructure constituent ainsi le réseau routier. Ces moyens permettent d'avoir des indications de vitesse fiables sur chaque segment.

Avantageusement, les conditions de trafic peuvent être obtenues en temps réel par communication avec des services de données en ligne. Ainsi, les données peuvent être actualisées et l'itinéraire recalculé en fonction des évolutions. Par ailleurs, ces services de données en ligne sont facilement accessibles depuis un téléphone portable, un ordinateur ou une tablette numérique.

L'utilisation du modèle de vitesse permet de prédire un profil de vitesse représentatif sur chaque segment de route. Ainsi, un profil de vitesse comprenant par exemple trois phases de puissance peut être obtenu, ce qui simplifie les calculs dans la gestion énergétique. Pour chacune de ces phases, la gestion énergétique optimale, correspondant à la répartition de couple (ou puissance) entre les deux moteurs, est recherchée, tout en assurant une contrainte de variation d'état de charge ΔSOC.

Ainsi, le problème d'optimisation peut être résolu de façon plus simple et rapide, par exemple de façon analytique ou semi-analytique.

### d) Construction d'un graphe adjoint étendu du réseau routier

La construction d'un graphe adjoint étendu est réalisée par les étapes successives suivantes :

i) Construction d'un graphe direct du réseau routier avec des nœuds et des arcs, les nœuds du graphe direct correspondant aux intersections du réseau routier, et les arcs du graphe direct correspondant aux routes reliant les intersections du réseau routier ;

ii) Construction d'un graphe adjoint du réseau routier avec des nœuds et des arcs, les nœuds du graphe adjoint correspondant aux arcs du graphe direct et les arcs du graphe adjoint correspondant à l'adjacence des arcs du graphe direct.

iii) Construction du graphe adjoint étendu à partir du graphe adjoint, en multipliant le nombre d'arcs du graphe adjoint, chacun des arcs multipliés étant associé à une valeur prédéfinie de variations de l'état de charge du moyen de stockage d'énergie (voir Figure 2), les valeurs prédéfinies étant dépendantes du moyen de stockage d'énergie.

On appelle, en théorie des graphes, un graphe adjoint d'un graphe G (dans ce cas le graphe direct), un graphe qui représente la relation d'adjacence entre les arêtes de G. Le graphe adjoint d'un graphe peut être défini de la manière suivante : chaque sommet du graphe adjoint représente un arc du graphe *G*, et deux sommets du graphe adjoint sont adjacents (c'est-à-dire reliés) si et seulement si les arcs correspondants partagent une extrémité commune dans le graphe *G*. Ainsi, le graphe adjoint est une représentation équivalente du graphe direct (et donc du réseau routier) où toutes les manœuvres sont correctement découplées et distinguées, ce qui permet une détermination précise des coûts énergétiques.

Pour les méthodes selon l'art antérieur, le réseau routier peut être modélisé comme un graphe direct. Soit le graphe *G* = (*V,A*), où *V* est l'ensemble des nœuds et *A* est l'ensemble des connections entre les nœuds, c'est-à-dire les arcs. Soit w: *A* → *W* une fonction qui assigne un poids à chaque arc du graphe. Dans les graphes utilisés pour la navigation conventionnelle, le poids associé aux arcs représente soit la longueur, soit le temps de parcours. Pour l'éco-navigation, chaque poids représente la consommation énergétique pour parcourir l'arc.

La prise en compte des accélérations d'interface entre les arcs adjacents pose un problème dans la modélisation du réseau routier en tant que graphe direct et surtout dans l'assignation des poids à chaque arc. En particulier, chaque nœud du graphe direct avec deux ou plus arcs entrants est critique car les vitesses moyennes sur chaque arc sont différentes et il n'y a pas donc pas de continuité sur les vitesses moyennes. Ainsi, au niveau des intersections, la vitesse au nœud d'interface n'est pas unique. Evidemment, ce fait empêche une assignation non ambiguë des poids sur les arcs. Donc, le graphe direct n'est pas adéquat pour le modèle de consommation énergétique proposé. Cette ambiguïté peut être résolue en utilisant le graphe adjoint comme graphe pour la stratégie de navigation proposée.

L'utilisation du graphe adjoint comme graphe de routage permet d'assigner de façon unique le poids à chaque arc du graphe adjoint, en découplant toutes les manœuvres possibles modélisées dans le graphe original *G*. De plus, grâce au fait que les manœuvres sont ainsi séparées, dans le graphe adjoint, on peut même supprimer les manœuvres qui ne sont pas autorisées dans la vraie vie (par exemple un tournant à gauche, etc.). Ceci n'est pas modélisable avec un graphe direct standard. Chaque arc du graphe adjoint représente un trajet sur deux arcs adjacents du graphe direct *G*, et donc chaque arc du graphe adjoint contient des informations sur un arc du graphe direct original *G* et aussi sur son arc en amont.

Cette propriété intrinsèque du graphe adjoint permet non seulement de considérer correctement les accélérations d'interface entre arcs adjacents, mais aussi de modéliser d'une manière plus réaliste l'impact de l'infrastructure sur la consommation d'énergie. Plus spécifiquement, selon une approche de modélisation proposée, le terme énergétique qui prend en compte les arrêts/redémarrages induits par l'infrastructure.

La multiplication des arcs du graphe adjoint étendu permet de limiter le nombre de calculs à une plage de valeur admissible (de l'état de charge de la batterie) et ainsi d'accélérer le temps de réponse, tout en étant représentatif du fonctionnement du véhicule et de ces contraintes.

De plus, l'utilisation d'un graphe adjoint permet de réduire le temps de calcul en ayant une bonne représentativité de la vitesse aux intersections.

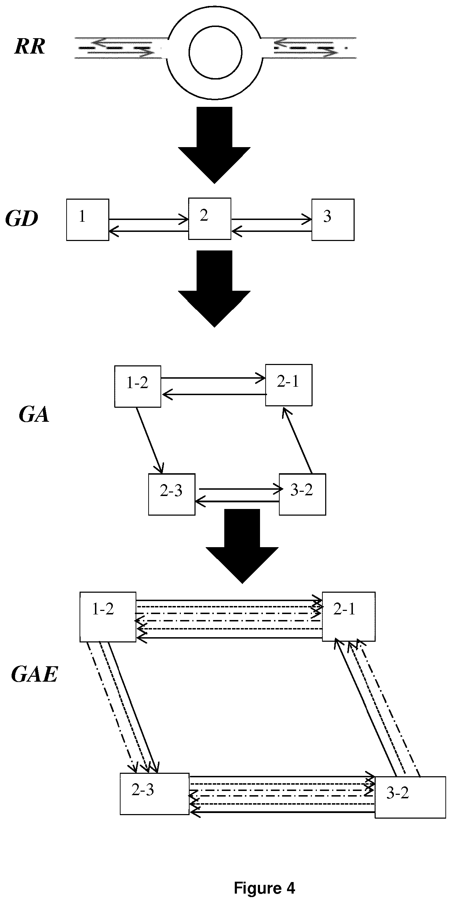

La figure 4 illustre, de manière schématique et non limitative, les étapes de construction du graphe adjoint étendu (GAE) à partir d'un réseau routier (RR).

Par exemple, sur le graphe représentatif du réseau routier (RR), on observe un rond-point reliant deux routes à double sens.

A partir de ce graphe de réseau routier (RR), un graphe direct (GD) est construit. Chaque nœud (1, 2, 3) du graphe direct (GD) correspond aux extrémités des segments de route du réseau routier (RR). Par exemple, le nœud n°2 correspond à l'intersection entre les deux routes du réseau routier RR. Il s'agit ici du rond-point. Les nœuds 1 et 3 correspondent aux extrémités de chacun des deux segments de route du réseau routier (RR), sans intersection. Les arcs de liaison entre les nœuds du graphe direct (GD) correspondent aux trajets possibles entre les nœuds. Ainsi, sur l'exemple du graphe routier (RR), on peut relier l'extrémité de la première route au rond-point et inversement et l'extrémité de la deuxième route au rond-point et inversement. Cela se traduit, dans le graphe direct (GD), par des arcs du nœud n°1 vers le nœud n°2 et inversement (du nœud n°2 vers le nœud n°1) et par des arcs du nœud n°3 vers le nœud n°2 et inversement (du nœud n°2 vers le nœud n°3). Ainsi, la construction du graphe direct (GD) représentatif du réseau routier (RR) comprend ici trois nœuds et quatre arcs. La construction du graphe direct représente une modélisation du réseau routier (RR).

Une fois le graphe direct (GD) obtenu, l'étape suivante consiste à établir un graphe adjoint (GA). Chaque nœud du graphe adjoint (GA) correspond à un arc du graphe direct (GD) et chaque arc du graphe adjoint (GA) correspond à l'adjacence des arcs du graphe direct (GD). Sur le graphe GA, le nœud 1-2 représente la liaison du nœud n°1 vers le nœud n°2 du graphe direct (GD). De la même manière, les nœuds 2-1, 2-3 et 3-2 représentent respectivement les liaisons du nœud n°2 vers le nœud n°1, du nœud n°2 vers le nœud n°3 et du nœud n°3 vers le nœud n°2. Les arcs modélisés du graphe adjoint (GA) représentent les adjacences possibles. Les liaisons entre 1-2 et 2-1, de même que 2-3 et 3-2 sont réversibles, c'est pourquoi les arcs sont à double sens. En revanche, les liaisons de 2-3 vers 1-2 ou vers 2-1 sont impossibles : il n'y a pas d'arc dans ce sens. De la même manière, la liaison de 2-1 vers 3-2 est impossible. Le graphe adjoint (GA) permet de mieux prendre en compte les interfaces des segments de route et notamment de mieux modéliser la consommation d'énergie dans ces zones. Ainsi, la consommation d'énergie est plus précise, ce qui explique l'importance de l'utilisation du graphe adjoint (GA).

Une fois le graphe adjoint (GA) obtenu, la dernière étape consiste à multiplier chacun des arcs du graphe adjoint (GA) pour définir un graphe adjoint étendu (GAE). Les nœuds 1-2, 2-1, 2-3 et 3-2 du graphe adjoint étendu (GAE) correspondent à ceux du graphe adjoint (GA). Chaque arc du graphe adjoint (GA) est multiplié par autant de valeurs prédéfinies de variation de l'état de charge du moyen de stockage d'énergie. Ainsi, à chacun des arcs multipliés, représentant initialement une adjacence de segments du réseau routier (RR), correspond une valeur prédéfinie de variation de l'état de charge du moyen de stockage d'énergie. On peut alors faire correspondre à chaque arc, une valeur de consommation de carburant, dépendant de l'arc considéré et de la valeur prédéfinie de variation d'état de charge du moyen de stockage d'énergie. En limitant la multiplication à des valeurs prédéfinies, on choisit une plage sur laquelle les variations d'état de charge sont possibles, ce qui limite la multiplication du nombre d'arcs, donc le nombre de calculs et le temps de calcul. Dans l'exemple du graphe adjoint étendu (GAE), chacun des arcs du graphe adjoint (GA), correspondant aux flèches continues noires, a été multiplié par 3 (une flèche continue, une flèche en trait pointillé et une flèche en trait mixte). Ainsi, à chacune des flèches, continue, trait pointillé ou trait mixte, correspond une valeur différente de variation d'état de charge du moyen de stockage d'énergie, par exemple, un pas de 0.5% sur la variation de l'état de charge entre chaque flèche.

De préférence, les valeurs prédéfinies de variations de l'état de charge du moyen de stockage d'énergie peuvent correspondre à une discrétisation de valeurs entre une variation minimale de l'état de charge du moyen de stockage d'énergie et une variation maximale de l'état de charge du moyen de stockage d'énergie. Ainsi, la discrétisation est délimitée dans une plage admissible de variation de l'état de charge. Cette plage admissible peut être définie au préalable, et/ou bien requise par l'utilisateur, et/ou dépendante de la topologie du réseau routier (voir Figure 2). La limitation de valeurs à l'intérieur de cette plage admissible permet de limiter le nombre d'arcs du graphe adjoint étendu, donc de limiter le nombre de calculs réalisés par l'algorithme et d'accélérer le temps de réponse.

Selon une variante de l'invention, la discrétisation des valeurs peut être par pas réguliers ou irréguliers. Elle peut faire l'objet d'une validation préalable pour vérifier si les résultats du modèle discret, notamment des pas, correspondent à celui obtenu par un modèle dynamique. L'utilisation de valeurs discrètes dans la plage admissible de variations de l'état de charge permet de limiter encore le temps de calcul, tout en assurant une bonne fiabilité aux résultats obtenus, notamment grâce à la validation préalable des résultats.

De préférence, les valeurs prédéfinies de variations de l'état de charge peuvent dépendre du moyen de stockage d'énergie, d'un utilisateur du véhicule et/ou de la topologie du réseau routier (forte pente positive ou négative d'un segment du réseau routier par exemple) : voir étape facultative ΔSOC de la Figure 2. En effet, les caractéristiques du moyen de stockage d'énergie, la topologie du réseau routier, ou encore d'autres volontés de l'utilisateur peuvent impacter la plage de valeurs admissibles (borne minimale et/ou borne maximale) ou la discrétisation (valeur de pas de discrétisation). Les variations de l'état de charge du moyen de stockage d'énergie peuvent prendre des valeurs positives (utilisation du moyen de stockage d'énergie pour alimenter la machine électrique qui fonctionne alors en moteur et qui entraîne ainsi le véhicule) ou des valeurs négatives (dans ce cas, le moyen de stockage d'énergie est rechargé par la machine électrique qui fonctionne alors en générateur).

Avantageusement, le graphe adjoint étendu peut être construit au moyen de la topologie du réseau routier. De ce fait, le graphe adjoint étendu peut prendre en compte les variations d'altitude de chaque segment de route, les caractéristiques propres du réseau routier, de manière à améliorer la précision de consommation d'énergie.

Selon un mode de réalisation de l'invention, la topologie du réseau routier peut être déterminée par des moyens de géolocalisation (par exemple de type GPS ou Galileo). De ce fait, la topologie est facilement accessible depuis un téléphone portable, un ordinateur ou une tablette numérique.

### e) Détermination de la quantité de carburant consommé

Pour chaque arc du graphe adjoint étendu construit à l'étape précédente, on calcule la quantité de carburant consommé (ce qui signifie la quantité de carburant qui devrait être consommée par le véhicule, sur l'arc) par utilisation de la loi de gestion énergétique déterminée à l'étape c). En effet, chaque arc du graphe dépend à la fois des segments de route amont et aval, des caractéristiques de l'intersection, définissant ainsi un profil de variation de vitesse à l'intersection, et de la variation d'état de charge du moyen de stockage d'énergie associée à cet arc. La loi de gestion énergétique est utilisée pour déterminer la proportion de répartition de puissance entre le moteur thermique et la machine électrique pour respecter la contrainte de variation sur l'état de charge, sur chaque arc du graphe adjoint étendu. Une fois la répartition connue, il est possible de déterminer la quantité de carburant consommé pour répondre à la contrainte de variation d'état de charge de l'arc correspondant.

Ainsi, sur chaque arc du graphe adjoint étendu, un poids correspondant à la quantité de carburant consommé peut être alloué.

*f) Détermination de l'itinéraire*

Une fois que, sur chaque arc du graphe adjoint étendu, est alloué un poids correspondant à la quantité de carburant consommé, il est possible par un algorithme de définir le chemin permettant de minimiser la consommation d'énergie depuis la position initiale jusqu'à la destination finale, tout en vérifiant des contraintes sur l'état de charge du moyen de stockage d'énergie.

L'algorithme peut notamment être basé sur un algorithme de plus court chemin.

De manière avantageuse, l'algorithme de plus court chemin est un algorithme de Bellman-Ford. Ce type d'algorithme permet de trouver une solution en un nombre limité d'itérations. De plus, il présente l'avantage de pouvoir prendre en compte des poids négatifs (situation de récupération d'énergie), contrairement à d'autres algorithmes, comme celui de Dijkstra. Cet avantage est particulièrement important pour les véhicules hybrides à la fois pour la minimisation de carburant consommé que pour la précision et la fiabilité de l'algorithme.

Selon une mise en œuvre de l'invention, les contraintes de l'état de charge du moyen de stockage d'énergie peuvent être l'état de charge initial, l'état de charge final, la variation globale entre l'état de charge initial et l'état de charge final et/ou les variations d'état de charge sur chacun des segments de route du réseau routier. En effet, le moyen de stockage d'énergie (par exemple une batterie) a généralement des critères de charges minimale et maximale à respecter. Intégrer ces contraintes au procédé permet d'éviter tout risque d'endommagement du moyen de stockage d'énergie. Une variation globale entre l'état de charge initial et l'état de charge final peut également être imposée, par exemple par l'utilisateur pour éviter une décharge trop forte. Enfin, il peut être nécessaire aussi d'ajouter des contraintes sur les variations d'état de charge sur chaque segment de route pour éviter par exemple des valeurs intermédiaires d'état de charge inacceptables.

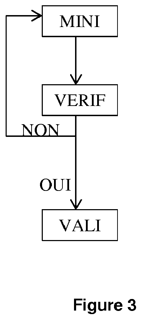

La figure 3 illustre, de manière schématique et non limitative, un mode de réalisation de l'algorithme utilisé pour l'étape de recherche d'itinéraire. L'algorithme comprend les étapes successives suivantes :

- Un algorithme de plus court chemin cherche un chemin allant de la position initiale à la destination, en minimisant (MINI) la quantité de carburant consommé, sans tenir compte des contraintes de l'état de charge du moyen de stockage d'énergie. Ainsi, la résolution mathématique du problème est plus simple et plus rapide.
- Une fois que l'algorithme a trouvé une solution au problème de minimisation de carburant précédent, sans contraintes, il vérifie (VERIF) si les contraintes de l'état de charge du moyen de stockage d'énergie sont respectées. On parle de vérification des contraintes a posteriori. La vérification des contraintes est alors une étape rapide. A l'issue de cette étape, soit les contraintes sont vérifiées (OUI), soit elles ne le sont pas (NON).
- Si les contraintes sont vérifiées (OUI), l'itinéraire retenu correspond au chemin résultant du problème de minimisation et la résolution est validée (VALI). Si elles ne le sont pas (NON), les deux étapes précédentes (résolution du problème de minimisation et de vérification des contraintes) sont répétées en boucle, en cherchant une nouvelle solution (par nouvelle, on entend différente des solutions précédentes), jusqu'à ce qu'il existe une solution pour laquelle les contraintes sont vérifiées (OUI).

Cet algorithme, basé sur un algorithme de plus court chemin et sur une vérification des contraintes a posteriori permet un temps de calcul considérablement réduit, grâce à la complexité polynômiale, par rapport à un algorithme qui intégrerait les contraintes dans le problème initial. En effet, la complexité du problème initial, qui serait ainsi non-polynômiale et donc plus complexe à résoudre, serait alors considérablement augmentée. La vérification des contraintes a posteriori permet de s'affranchir de ces contraintes, dans un premier temps, et d'obtenir des résultats très rapidement. Par ailleurs, la vérification des contraintes est très facilement réalisable et ne pose aucun problème particulier, ni d'un point de vue numérique, ni d'un point de vue temps de calcul.

De manière préférée, l'itinéraire peut être affiché sur un dispositif autonome ou sur le tableau de bord du véhicule. Ainsi, l'itinéraire peut être suivi aisément par le conducteur du véhicule.

En outre, l'invention concerne aussi un produit programme d'ordinateur téléchargeable depuis un réseau de communication et/ou enregistré sur un support lisible par ordinateur et/ou exécutable par un processeur ou un serveur. Le produit comprend des instructions de code de programme pour la mise en œuvre du procédé selon l'une des caractéristiques précédentes, lorsque le programme est exécuté sur un ordinateur ou sur un téléphone portable. Ainsi, le produit est facilement accessible par un utilisateur.

**Exemple d'application du procédé (selon l'invention)**

Une recherche d'itinéraire minimisant la consommation de carburant a été effectuée pour un véhicule hybride en utilisant le procédé décrit précédemment, selon l'invention.

Le réseau routier choisi représente le centre-ville de Paris. Les informations de trafic sur le réseau routier ont été fournies par HERE Maps pour la journée du 3 avril 2018, à 6h UTC (correspondant à l'heure de pointe). La masse du véhicule de 1595 kg a été prise en compte, ainsi que l'énergie maximale de la batterie de 7.6 kWh, énergie disponible correspondant à une charge à 100% de la batterie.

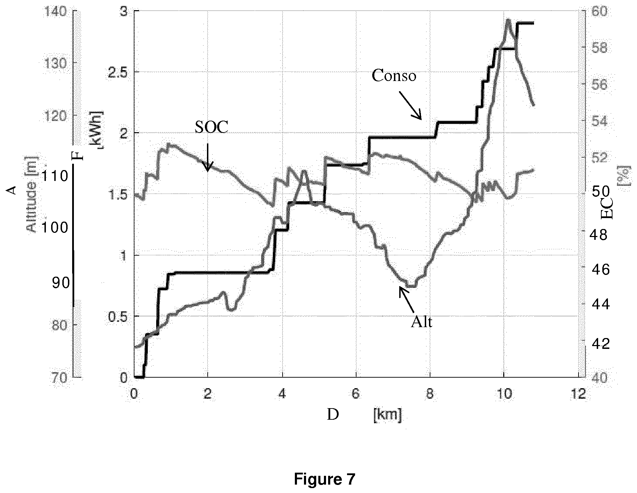

Après la sélection d'un point origine et d'un point destination, le procédé selon l'invention fournit un itinéraire répondant au problème de minimisation tout en respectant les contraintes du problème (variation globale de l'état de charge de +/-2%). L'itinéraire est illustré en figure 6. La figure 7 représente l'évolution, en fonction de la distance D, de l'état de charge de la batterie SOC, de la consommation de carburant Conso et de l'évolution de l'altitude Alt, le long de l'itinéraire correspondant à la figure 6. L'ordonnée EC correspond à l'échelle de l'état de charge de la batterie SOC ; l'ordonnée A, correspond à l'échelle d'altitude Alt et l'ordonnée F à celle de la consommation de carburant Conso.

A la destination, la consommation de carburant est de 2,89 kWh (soit environ 3 L / 100 km) avec un profil d'état de charge de la batterie commençant à 50% et se terminant à 51,6%, conformément aux contraintes du problème (variation de l'état de charge inférieure à 2%). Pour comparaison, si le véhicule fonctionnait en électrique pur (sans utiliser le moteur thermique), l'itinéraire optimal de minimisation d'énergie serait différent et l'état de charge de la batterie serait alors de 34,7%, violant ainsi la contrainte de variation d'état de charge de +/-2%.

Pour l'analyse du temps de calcul, la stratégie proposée a été implémentée dans MATLAB sur un ordinateur avec processeur Intel i7-4810MQ à 2,8 GHz et 16 Go de RAM. Pour une sélection aléatoire de cent paires origine / destination dans le graphe du réseau routier de la figure 6, le temps moyen de calcul est de 56 secondes, avec un écart-type de 33 secondes, ce qui témoigne des performances du procédé.

**Revendications**

1. Procédé de détermination d'un itinéraire, pour un véhicule de type hybride circulant au sein d'un réseau routier (RR), ledit véhicule comprenant un groupe moto-propulseur hybride, ledit groupe moto-propulseur hybride comportant un moteur à combustion interne et une machine électrique, ladite machine électrique étant reliée à un moyen de stockage d'énergie, ledit procédé minimisant la consommation énergétique (MINI) dudit moteur à combustion interne tout en respectant des contraintes sur l'état de charge (VERIF) dudit moyen de stockage d'énergie, **caractérisé en ce que** l'on réalise les étapes suivantes :

   a) On identifie (IDENT) la position et la destination dudit véhicule ;
   b) On construit un modèle de consommation énergétique (MOD) dudit véhicule, basé sur la consommation énergétique dudit moteur à combustion interne d'une part et la consommation et/ou récupération d'énergie dudit moyen de stockage d'énergie de ladite machine électrique d'autre part ;
   c) On construit une loi de gestion énergétique (GEST) déterminant la commande dudit groupe motopropulseur hybride à partir dudit modèle de consommation énergétique ;
   d) On construit (GRAPH) un graphe adjoint étendu (GAE) dudit réseau routier (RR) entre ladite position identifiée dudit véhicule et ladite destination identifiée dudit véhicule, le graphe adjoint étendu (GAE) étant obtenu par les étapes suivantes :

      i) On construit un graphe direct (GD) dudit réseau routier (RR) avec des nœuds et des arcs, lesdits nœuds dudit graphe direct (GD) correspondant aux intersections dudit réseau routier (RR), et lesdits arcs dudit graphe direct (GD) correspondant aux routes reliant lesdites intersections du réseau routier (RR) ;
      ii) On construit un graphe adjoint (GA) dudit réseau routier (RR) avec des nœuds et des arcs, lesdits nœuds dudit graphe adjoint (GA) correspondant auxdits arcs dudit graphe direct (GD) et lesdits arcs dudit graphe adjoint (GA) correspondant à l'adjacence desdits arcs dudit graphe direct (GD) ;
      iii) On construit ledit graphe adjoint étendu (GAE) à partir dudit graphe adjoint (GA), en multipliant le nombre d'arcs dudit graphe adjoint (GA), chacun desdits arcs multipliés étant associé à une valeur prédéfinie de variations dudit état de charge (ΔSOC) dudit moyen de stockage d'énergie, lesdites valeurs prédéfinies (ΔSOC) étant dépendantes dudit moyen de stockage d'énergie ;

   e) On détermine la quantité de carburant consommé (QCONSO) par ledit moteur à combustion interne, à partir de ladite loi de gestion énergétique (GEST), pour chaque arc du graphe adjoint étendu (GAE) ; et
   f) On détermine ledit itinéraire (ITI) entre ladite position identifiée dudit véhicule et ladite destination identifiée dudit véhicule au moyen d'un algorithme de plus court chemin qui minimise sur ledit graphe adjoint étendu (GAE) ladite quantité de carburant consommé (QCONSO) dudit moteur à combustion interne tout en respectant les contraintes sur ledit état de charge dudit moyen de stockage d'énergie.

**2.** Procédé selon la revendication 1, pour lequel lesdites valeurs prédéfinies de variations dudit état de charge (ΔSOC) dudit moyen de stockage d'énergie correspondent à une discrétisation de valeurs entre une variation minimale dudit état de charge dudit moyen de stockage d'énergie et une variation maximale dudit état de charge dudit moyen de stockage d'énergie.

**3.** Procédé selon l'une des revendications précédentes, pour lequel lesdites valeurs prédéfinies de variations dudit état de charge (ΔSOC) dépendent dudit moyen de stockage d'énergie, d'un utilisateur (UT) dudit véhicule et/ou d'une topologie (TOPO) dudit réseau routier (RR).

**4.** Procédé suivant l'une des revendication précédentes, pour lequel on définit, lors de l'étape c), un modèle de vitesses (VIT) dudit véhicule basé sur les informations de vitesses moyennes de circulation des véhicules sur lesdits segments de route dudit réseau routier (RR) et sur la topologie (TOPO) des intersections entre les routes adjacentes dudit réseau routier (RR).

**5.** Procédé suivant la revendication 4, dans lequel on détermine la vitesse moyenne au moyen de conditions de trafic (TRA) et/ou topologie (TOPO) et/ou des infrastructures (INFRA) dudit réseau routier (RR).

**6.** Procédé suivant la revendication 5, pour lequel les conditions de trafic (TRA) sont obtenues en temps réel par communication avec des services de données en ligne.

**7.** Procédé selon l'une des revendications 3 à 6, pour lequel on construit (GRAPH) le graphe adjoint étendu (GAE) au moyen de ladite topologie (TOPO) dudit réseau routier (RR).

**8.** Procédé selon l'une des revendications 3 à 7, pour lequel on détermine ladite topologie (TOPO) dudit réseau routier (RR) par des moyens de géolocalisation.

**9.** Procédé selon l'une des revendications précédentes, pour lequel ledit modèle de consommation énergétique (MOD) dépend des paramètres intrinsèques (PAR) du véhicule.

**10.** Procédé selon la revendication 9, pour lequel lesdits paramètres intrinsèques (PAR) du véhicule sont obtenus depuis une base de données et/ou sont indiqués par ledit utilisateur (UT) dudit véhicule.

**11.** Procédé selon l'une des revendications précédentes, pour lequel on affiche ledit itinéraire (ITI) sur un dispositif autonome ou sur le tableau de bord dudit véhicule.

**12.** Procédé selon l'une des revendications précédentes, dans lequel ledit algorithme de plus court chemin est un algorithme de Bellman-Ford.

**13.** Procédé selon l'une des revendications précédentes, pour lequel lesdites contraintes dudit état de charge dudit moyen de stockage d'énergie sont l'état de charge initial, l'état de charge final, la variation globale entre l'état de charge initial et l'état de charge final, et/ou les variations d'état de charge sur chacun desdits segments de route dudit réseau routier.

**14.** Procédé selon l'une des revendications précédentes, pour lequel ledit algorithme de plus court chemin comprend les étapes successives suivantes :

(1) On minimise (MINI), par ledit algorithme de plus court chemin, ladite quantité de carburant consommé (QCONSO);
(2) On vérifie (VERIF) si lesdites contraintes dudit état de charge dudit moyen de stockage d'énergie sont respectées ; et
(3) Si lesdites contraintes dudit état de charge dudit moyen de stockage d'énergie sont respectées, ledit itinéraire (ITI) recherché correspond au chemin issu de la minimisation, et si non, on réitère les étapes (1) et (2).

**15.** Produit programme d'ordinateur téléchargeable depuis un réseau de communication et/ou enregistré sur un support lisible par ordinateur et/ou exécutable par un processeur ou un serveur, comprenant des instructions de code de programme pour la mise en œuvre du procédé selon l'une des revendications précédentes, lorsque ledit programme est exécuté sur un ordinateur ou sur un téléphone portable.

**Patentansprüche**

1. Verfahren zur Bestimmung einer Route für ein Hybridfahrzeug, das innerhalb eines Straßennetzes (RR) fährt, wobei das Fahrzeug einen Hybridantriebsstrang umfasst, wobei der Hybridantriebsstrang einen Verbrennungsmotor und eine elektrische Maschine aufweist, wobei die elektrische Maschine mit einem Energiespeichermittel verbunden ist, wobei das Verfahren den Energieverbrauch des Verbrennungsmotors minimiert (MINI) und gleichzeitig Nebenbedingungen bezüglich des Ladezustands des Energiespeichermittels berücksichtigt (VERIF), **dadurch gekennzeichnet, dass** die folgenden Schritte ausgeführt werden:

   a) es werden die Position und das Ziel des Fahrzeugs identifiziert (IDENT);
   b) es wird ein Energieverbrauchsmodell (MOD) des Fahrzeugs erstellt, das auf dem Energieverbrauch des Verbrennungsmotors einerseits und dem Energieverbrauch und/oder der Energierückgewinnung des Energiespeichermittels der elektrischen Maschine andererseits basiert;
   c) es wird ein Energiemanagementgesetz (GEST), das die Steuerung des Hybridantriebsstrangs bestimmt, aus dem Energieverbrauchsmodell konstruiert;
   d) es wird ein erweiterter Kantengraph (GAE) des Straßennetzes (RR) zwischen der identifizierten Position des Fahrzeugs und dem identifizierten Ziel des Fahrzeugs konstruiert (GRAPH), wobei der erweiterte Kantengraph (GAE) durch die folgenden Schritte erhalten wird:

      i) es wird ein direkter Graph (GD) des Straßennetzes (RR) mit Knoten und Kanten konstruiert, wobei die Knoten des direkten Graphen (GD) den Kreuzungen des Straßennetzes (RR) entsprechen und die Kanten des direkten Graphen (GD) den Straßen entsprechen, welche die Kreuzungen des Straßennetzes (RR) verbinden;
      ii) es wird ein Kantengraph (GA) des Straßennetzes (RR) mit Knoten und Kanten konstruiert, wobei die Knoten des Kantengraphen (GA) den Kanten des direkten Graphen (GD) entsprechen und die Kanten des Kantengraphen (GA) der Adjazenz der Kanten des direkten Graphen (GD) entsprechen;
      iii) es wird der erweiterte Kantengraph (GAE) aus dem Kantengraphen (GA) konstruiert, indem die Anzahl der Kanten des Kantengraphen (GA) vervielfacht wird, wobei jede der vervielfachten Kanten einem vordefinierten Wert von Änderungen des Ladezustands ($\Delta$SOC) des Energiespeichermittels zugeordnet ist, wobei die vordefinierten Werte ($\Delta$SOC) von dem Energiespeichermittel abhängig sind;

   e) es wird für jede Kante des erweiterten Kantengraphen (GAE) die Menge des von dem Verbrennungsmotor verbrauchten Kraftstoffs (QCONSO) aus dem Energiemanagementgesetz (GEST) bestimmt; und
   f) es wird die Route (ITI) zwischen der identifizierten Position des Fahrzeugs und dem identifizierten Ziel des Fahrzeugs mittels eines Algorithmus des kürzesten Weges bestimmt, welcher auf dem erweiterten Kantengraphen (GAE) die Menge des verbrauchten Kraftstoffs (QCONSO) des Verbrennungsmotors minimiert und gleichzeitig die Nebenbedingungen bezüglich des Ladezustands des Energiespeichermittels berücksichtigt.

2. Verfahren nach Anspruch 1, wobei die vordefinierten Werte von Änderungen des Ladezustands ($\Delta$SOC) des Energiespeichermittels einer Diskretisierung von Werten zwischen einer minimalen Änderung des Ladezustands des Energiespeichermittels und einer maximalen Änderung des Ladezustands des Energiespeichermittels entsprechen.

3. Verfahren nach einem der vorhergehenden Ansprüche, wobei die vordefinierten Werte von Änderungen des Ladezustands ($\Delta$SOC) von dem Energiespeichermittel, von einem Benutzer (UT) des Fahrzeugs und/oder von einer Topologie (TOPO) des Straßennetzes (RR) abhängen.

4. Verfahren nach einem der vorhergehenden Ansprüche, wobei in Schritt c) ein Modell der Geschwindigkeiten (VIT) des Fahrzeugs definiert wird, das auf den Informationen über mittlere Fahrgeschwindigkeiten der Fahrzeuge auf den Straßenabschnitten des Straßennetzes (RR) und auf der Topologie (TOPO) der Kreuzungen zwischen den benachbarten Straßen des Straßennetzes (RR) basiert.

5. Verfahren nach Anspruch 4, wobei die mittlere Geschwindigkeit mittels der Verkehrsbedingungen (TRA) und/oder der Topologie (TOPO) und/oder der Infrastrukturen (INFRA) des Straßennetzes (RR) bestimmt wird.

6. Verfahren nach Anspruch 5, wobei die Verkehrsbedingungen (TRA) in Echtzeit durch Kommunikation mit Online-Datendiensten erhalten werden.

7. Verfahren nach einem der Ansprüche 3 bis 6, wobei der erweiterte Kantengraph (GAE) mittels der Topologie (TOPO) des Straßennetzes (RR) konstruiert wird (GRAPH).

8. Verfahren nach einem der Ansprüche 3 bis 7, wobei die Topologie (TOPO) des Straßennetzes (RR) durch Geolokalisierungsmittel bestimmt wird.

9. Verfahren nach einem der vorhergehenden Ansprüche, wobei das Energieverbrauchsmodell (MOD) von den inhärenten Parametern (PAR) des Fahrzeugs abhängt.

10. Verfahren nach Anspruch 9, wobei die inhärenten Parameter (PAR) des Fahrzeugs aus einer Datenbank erhalten werden und/oder von dem Benutzer (UT) des Fahrzeugs angegeben werden.

11. Verfahren nach einem der vorhergehenden Ansprüche, wobei die Route (ITI) auf einer autonomen Vorrichtung oder auf dem Armaturenbrett des Fahrzeugs angezeigt wird.

12. Verfahren nach einem der vorhergehenden Ansprüche, wobei der Algorithmus des kürzesten Weges ein Bellman-Ford-Algorithmus ist.

13. Verfahren nach einem der vorhergehenden Ansprüche, wobei die Nebenbedingungen des Ladezustands des Energiespeichermittels der Anfangsladezustand, der Endladezustand, die Gesamtänderung zwischen dem Anfangsladezustand und dem Endladezustand und/oder die Änderungen des Ladezustands auf jedem der Straßenabschnitte des Straßennetzes sind.

14. Verfahren nach einem der vorhergehenden Ansprüche, wobei der Algorithmus des kürzesten Weges die folgenden aufeinander folgenden Schritte umfasst:

(1) es wird durch den Algorithmus des kürzesten Weges die Menge des verbrauchten Kraftstoffs (QCONSO) minimiert (MINI);
(2) es wird überprüft (VERIF), ob die Nebenbedingungen des Ladezustands des Energiespeichermittels erfüllt sind; und
(3) falls die Nebenbedingungen des Ladezustands des Energiespeichermittels erfüllt sind, entspricht die gesuchte Route (ITI) dem bei der Minimierung erhaltenen Weg, und andernfalls werden die Schritte (1) und (2) wiederholt.

15. Computerprogrammprodukt, das von einem Kommunikationsnetz herunterladbar und/oder auf einem computerlesbaren Medium aufgezeichnet und/oder von einem Prozessor oder einem Server ausführbar ist und das Programmcodeanweisungen zur Durchführung des Verfahrens nach einem der vorhergehenden Ansprüche, wenn das Programm auf einem Computer oder auf einem Mobiltelefon ausgeführt wird, umfasst.

**Claims**

1. Method for determining a route, for a hybrid vehicle being driven on a road network (RR), said vehicle comprising a hybrid drivetrain, said hybrid drivetrain comprising an internal combustion engine and an electric machine, said electric machine being connected to a means for storing energy, said method minimizing (MINI) the energy consumption of said internal combustion engine while meeting (VERIF) constraints on the state of charge of said means for storing energy, **characterized in that** the following steps are carried out:

a) the position and destination of said vehicle are identified (IDENT);
b) a model of energy consumption (MOD) of said vehicle is constructed based on the one hand on the energy consumption of said internal combustion engine and on the other hand on the energy consumption and/or recovery of said means for storing energy of said electric machine;
c) an energy management law (GEST) determining the way in which said hybrid drivetrain is controlled is constructed based on said model of energy consumption;
d) an extended adjunct graph (GAE) of said road network (RR) between said identified position of said vehicle and said identified destination of said vehicle is constructed (GRAPH), the extended adjunct graph (GAE) being obtained via the following steps:

i) a directed graph (GD) of said road network (RR) with nodes and arcs is constructed, said nodes of said directed graph (GD) corresponding to the intersections of said road network (RR), and said arcs of said directed graph (GD) corresponding to the roads connecting said intersections of the road network (RR);

ii) an adjunct graph (GA) of said road network (RR) with nodes and arcs is constructed, said nodes of said adjunct graph (GA) corresponding to said arcs of said directed graph (GD) and said arcs of said adjunct graph (GA) corresponding to the adjacency of said arcs of said directed graph (GD);

iii) said extended adjunct graph (GAE) is constructed from said adjunct graph (GA), by multiplying the number of arcs of said adjunct graph (GA), each of said multiplied arcs being associated with a predefined value (ΔSOC) of variations in said state of charge of said means for storing energy, said predefined values (ΔSOC) being dependent on said means for storing energy;

e) the amount of fuel consumed (QCONSO) by said internal combustion engine is determined using said energy management law (GEST), for each arc of the extended adjunct graph (GAE); and

f) said route (ITI) between said identified position of said vehicle and said identified destination of said vehicle is determined by means of a shortest-path algorithm that minimizes, on said extended adjunct graph (GAE), said amount of fuel consumed (QCONSO) by said internal combustion engine while meeting constraints on said state of charge of said means for storing energy.

2. Method according to Claim 1, wherein said predefined values (ΔSOC) of variations in said state of charge of said means for storing energy correspond to a discretization of values between a minimum variation in said state of charge of said means for storing energy and a maximum variation in said state of charge of said means for storing energy.

3. Method according to one of the preceding claims, wherein said predefined values (ΔSOC) of variations in said state of charge depend on said means for storing energy, on a user (UT) of said vehicle and/or on a topology (TOPO) of said road network (RR).

4. Method according to one of the preceding claims, wherein, in step c), a model of speeds (VIT) of said vehicle is defined based on information regarding the average driving speeds of vehicles over said road segments of said road network (RR) and on the topology (TOPO) of the intersections between the adjacent roads of said road network (RR).

5. Method according to Claim 4, wherein the average speed is determined by means of the traffic conditions (TRA) and/or topology (TOPO) and/or infrastructure (INFRA) of said road network (RR).

6. Method according to Claim 5, wherein the traffic conditions (TRA) are obtained in real time by communication with web services.

7. Method according to one of Claims 3 to 6, wherein the extended adjunct graph (GAE) is constructed (GRAPH) by means of said topology (TOPO) of said road network (RR) .

8. Method according to one of Claims 3 to 7, wherein said topology (TOPO) of said road network (RR) is determined via geolocation means.

9. Method according to one of the preceding claims, wherein said energy consumption model (MOD) depends on intrinsic parameters (PAR) of the vehicle.

10. Method according to Claim 9, wherein said intrinsic parameters (PAR) of the vehicle are obtained from a database and/or are indicated by said user (UT) of said vehicle.

11. Method according to one of the preceding claims, wherein said route (ITI) is displayed on a stand-alone device or on the dashboard of said vehicle.

12. Method according to one of the preceding claims, wherein said shortest-path algorithm is a Bellman-Ford algorithm.

13. Method according to one of the preceding claims, wherein said constraints on said state of charge of said means for storing energy are the initial state of charge, the final state of charge, the overall change between the initial state of charge and the final state of charge, and/or changes in state of charge on each of said road segments of said road network.

**14.** Method according to one of the preceding claims, wherein said shortest-path algorithm comprises the following successive steps:

(1) said amount of fuel consumed (QCONSO) is minimized (MINI) using said shortest-path algorithm;
(2) it is verified (VERIF) whether said constraints on said state of charge of said means for storing energy are met; and
(3) if said constraints on said state of charge of said means for storing energy are met, said sought-after route (ITI) corresponds to the path resulting from the minimization, and, if not, steps (1) and (2) are reiterated.

**15.** Computer program product downloadable from a communication network and/or stored on a medium that is computer-readable and/or executable by a processor or a server, comprising program-code instructions for implementing the method according to one of the preceding claims, when said program is executed on a computer or on a mobile telephone.

**Figure 1**

**Figure 2**

```
        ┌──────────┐
  ┌────▶│   MINI   │
  │      └────┬─────┘
  │           │
  │           ▼
  │      ┌──────────┐
  │      │  VERIF   │
  │      └────┬─────┘
  │  NON      │
  └───────────┤
              │
              │ OUI
              ▼
        ┌──────────┐
        │   VALI   │
        └──────────┘
```

**Figure 3**

*RR*

*GD*

*GA*

*GAE*

Figure 4

Figure 5a

Figure 5b

Figure 6

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2012123657 A
- US 2012179315 A
- US 2012066232 A
- US 9091560 B
- FR 3057951 A1

### Littérature non-brevet citée dans la description

- **ANDERSEN O ; JENS CS ; TORP K ; YANG B.** EcoTour : Reducing the environmental footprint of vehicles using eco-routes. *Proc. 2013 IEEE 14th Int. Conf. on Mobile Data Management,* 03 Juin 2013
- **BORIBOONSOMSIN K ; BARTH MJ ; ZHU W ; VU A.** Eco-routing navigation system based on multisource historical and real-time traffic information. *IEEE Trans. on Intelligent Transportation Systems,* 2012, vol. 13 (4), 1694-1704
- **BEN DHAOU I.** Fuel estimation model for ECO-driving and ECO-routing. *Proc. 2011 IEEE Intelligent Vehicles Symposium,* 05 Juin 2011, 37-42
- **ERICSSON E ; LARSSON H ; BRUNDELL-FREIJ K.** Optimizing route choice for lowest fuel consumption - Potential effects of a new driver support tool. *Transportation research Part C,* 2006, vol. 14, 369-383
- **S. KLUGE ; C. SANTA ; S. DANGL ; S. WILD ; M. BROKATE ; K. REIF ; F. BUSCH.** On the Computation of the Energy-Optimal Route Dépendent on the Traffic Load in Ingolstadt. *Transportation Research Part C,* 2013, vol. 36, 97-115
- **Y. M. NIE ; Q. LI.** An Eco-Routing Model Considering Microscopic Vehicle Operating Conditions. *Transportation Research part B,* 2013, vol. 55, 154-170
- **J. ZHAO ; A. SCIARRETTA.** Design and Control Co-optimisation for hybrid powertrains : Development of Dedicated Optimal Energy Management Strategy. *IFAC-PapersOnline,* 2016, vol. 49 (11), 277-284
- **M.M. NEJAD ; L. MASHAYEKHY ; D. GROSU ; R. B. CHINNAM.** Optimal routing for Plug-in Hybrid Electric Vehicles. *Transportation Science,* 2017, vol. 51 (4), 1304-1325
- **M. STREHLER ; S. MERTING ; C. SCHWAN.** Energy-efficient shortest routes for electric and hybrid vehicles. *Transportation Research Part B,* 2017, vol. 103, 111-135